# EUROPEAN PATENT SPECIFICATION

(11) **EP 1 518 766 B1**
(45) Date of publication and mention of the grant of the patent: **13.09.2006**
(21) Application number: 04017962.4
(22) Date of filing: 29.07.2004
(51) Int. Cl.: B60R 22/44

(54) **Method of controlling a seatbelt retracting device with a motor and corresponding device**
Verfahren zur Steuerung eines Sicherheitsgurtaufrollgeräts und Vorrichtung dafür.
Procédé de commander un dispositif pour un enrouleur de ceinture de sécurité et dispositif à cet effet

(30) Priority: 25.09.2003 JP 2003332854
(43) Date of publication of application: 30.03.2005
(73) Proprietor: TAKATA CORPORATION, Minato-ku, Tokyo 106-8510 (JP)
(72) Inventor: Tanaka, Koji, Takata Corporation, Tokyo 106-8510 (JP); Inuzuka, Koji, Takata Corporation, Tokyo 106-8510 (JP)
(74) Representative: Banzer, Hans-Jörg

(56) References cited:
- EP-A- 1 293 401
- US-A1- 2004 108 697

## Description

### [Technical Field]

The present invention relates to a method of controlling a seatbelt retracting device having a mechanism for retracting a seatbelt by a motor and a respective seatbelt retracting device.

### [Background Art]

A seatbelt retracting device mounted to a motor vehicle or the like has a function to absorb the portion of a seatbelt which is excessively withdrawn by an occupant being seated after having withdrawn the seat belt and fastened a tongue to a buckle device. In order to implement this function, a single return spring is employed in the seatbelt retracting device in the related art. When fastening the seatbelt, when a human withdraws the seatbelt against an urging force of the return spring, engages the tongue with the buckle, and releases his/her hand, an excessively withdrawn portion is retracted by the seatbelt retracting device by a force of the return spring until the excessively withdrawn portion fits the human body.

As described above, in the seatbelt retracting device, it is required to satisfy the following conditions simultaneously;
(1) to retract the excessively withdrawn seatbelt positively until it fits the human body, and to retract the seatbelt withdrawn until it is completely stored in a storage positively when it is not put on the human; and
(2) to prevent from giving an unnecessary feeling of pressure to a breast or the like of the occupant when being put normally. However, in the seatbelt retracting device which utilizes the urging force of the single return spring, when a spring providing a weak urging force is used to alleviate a feeling of pressure applied to the breast of the occupant when being put, the retracting force generated at the time of retraction (at the time of storing) of the belt is insufficient, whereby operability and storability are lowered. In contrast, when a spring which provides a strong urging force is used in order to demonstrate a sufficient retracting force at the time of retraction, a feeling of pressure applied to the breast of the occupant when being put normally increases.

Also, in the seatbelt retracting device in the related art, since the single return spring is built in, there is another problem in that a force required for withdrawing the seatbelt increases as the withdrawn amount of the seatbelt increases since the return spring is wound as the withdrawing amount of the seatbelt increases, whereby the urging force also increases.

As a seatbelt retracting device for solving the above described problems, a device in which the seatbelt is retracted by a motor, or the combination of the motor and a return spring is proposed, which is disclosed in Japanese Unexamined Patent Application Publication No. 2001-225720. The seatbelt retracting device having a mechanism for retracting the seatbelt by the use of the motor as described above is also described in Japanese Unexamined Patent Application Publication No. 11-301407, and in Japanese Unexamined Patent Application Publication No. 11-334533.

In the seatbelt retracting device with a motor in the related art described above, it generally controls the power source of the motor to be turned off at the moment when retraction of the seatbelt is completed. When the power source of the motor is left on when retraction of the seatbelt is completed, not only the power source of a battery is wasted, but also the motor is overheated. Therefore, there arises another problem that a motor having a heat resistant property correspondingly has to be employed.

Therefore, a control system which observes a current to be flown to the motor, and when the value of the current exceeds a predetermined value, recognizes that retraction is completed, and then turns off the power to be supplied to the motor is generally employed. Such a system is shown in document EP 1293401 A2

### [Problems to be Solved by the Invention]

In the control of turning the power distribution to the motor off in the related art, a current value at which retraction is recognized to be completed is set to a large value for ensuring retraction of the seatbelt. However, in the case where a part of the body (arm, for example) of an occupant is caught in the seatbelt during retraction, the part of the body of the occupant is tightened by a retraction force of the motor, which may give a feeling of pressure to the occupant. When attempt is made by the occupant to withdraw the seatbelt during retraction, he/she has to withdraw the seatbelt against the strong retracting force of the motor, which requires a strong force.

If the current value at which retraction is recognized to be completed is set to a small value in order to avoid such situation, the seatbelt retracting device by itself may be deteriorated and hence a torque required for drive increases, or when the output of the motor is lowered, it may be recognized that retraction is completed before retraction is actually completed and hence the power distribution to the motor is stopped, which results in insufficient retraction.

In view of such circumstances, it is an object of the present invention is to provide a method of controlling a seatbelt retracting device with a motor and a respective seatbelt retracting device, in which positive retraction can be achieved in the normal state, a significant feeling of pressure is prevented when part of the body of the occupants is caught in the seatbelt, and the seatbelt can be withdrawn with a small force even during retraction.

### [Means for Solving the Problems]

According to the present invention this object is achieved by a method of controlling a seatbelt retracting device as defined in claim 1 and a seatbelt retracting device as defined in claim 4. The dependent claims define preferred and advantageous embodiments of the invention.
In order to solve the problem described above, the first aspect of the invention is a method of controlling a seatbelt retracting device with a motor including a mechanism for retracting a seatbelt by the motor characterized in that the motor is adapted to be stopped when the rate of increase in current flowing to the motor reaches or exceeds a predetermined value.

According to the present invention, the motor is adapted to be stopped when the rate of increase in current flowing to the motor reaches or exceeds the predetermined value. In the normal case, when retraction of the seatbelt is completed, since a load of the motor abruptly increases, the current abruptly increases. Therefore, by adapting the motor to be stopped when the rate of increase in current reaches or exceeds a threshold, the motor is prevented from being supplied with excessive current after completion of retraction.

In the case where a part of the body (arm, for example) of the occupant is caught in the seatbelt, and attempt is made by the occupant to withdraw the seatbelt during retraction, since the current of the motor abruptly increases in the initial stage. Consequently, the rate of increase in current exceeds the predetermined threshold, and hence power distribution to the motor is stopped, which consequently prevents a significant feeling of pressure from being applied to the body of the occupant, or a large force from being required for withdrawing the seatbelt.

In order to solve the problem described above, the second measure is the first measure characterized in that the motor is stopped also when a current value flowing to the motor reaches or exceeds a predetermined value.

As described later in detail, when the first measure is employed, if the seatbelt retracting device by itself is deteriorated and hence a large current is required for retraction, there may be a case in which even when the current to the motor reaches a saturation value when retraction is almost completed, and hence the rate of increase in current of the motor does not increase too much even when retraction is completed.

In this measure, since the motor is adapted to be stopped also when the current value flowing to the motor reaches or exceeds the predetermined value, by setting the predetermined value to a value close to the saturation value of the current to the motor, the power distribution to the motor can be stopped upon completion of retraction even in such a case.

In order to solve the problem described above, the third measure is the first measure or the second measure, characterized in that control to stop the motor is not executed for a predetermined period from the moment when the motor is activated.

Since a counter electromotive force of the motor is small immediately after activation of the motor, an accelerated current flows and the current flowing to the motor abruptly increases. In some case, it exceeds the threshold of the rate of increase in current according to the above-described first measure and the second measure and hence the motor may stop. According to this measure, since control to stop the motor is not executed for the predetermined period from the moment when the motor is activated, malfunction due to the accelerated current flown immediately after the activation of the motor can be positively prevented.
Furthermore, a seatbelt retracting device is provided being adapted to carry out the above described method of the present invention by using respective motor current detecting means and motor control means.

### [Advantages]

As described above, according to the present invention, a method of controlling a seatbelt retracting device with a motor in which positive retraction can be achieved in the normal state, a significant feeling of pressure is prevented when part of the body of the occupant is caught in the seatbelt, and the seatbelt can be withdrawn with a small force even during retraction.

### [Brief Description of the Drawings]

Fig. 1 is a schematic diagram showing an example of a structure of a device which implements a method of controlling according to an embodiment of the present invention.
Fig. 2 is an explanatory drawing sowing a method of controlling as an example of the embodiment of the present invention.
Fig. 3 is an explanatory drawing sowing a method of controlling as an example of the embodiment of the present invention.
Fig. 4 is an explanatory drawing sowing a method of controlling as an example of the embodiment of the present invention.

### [Best Mode for Carrying Out the Invention]

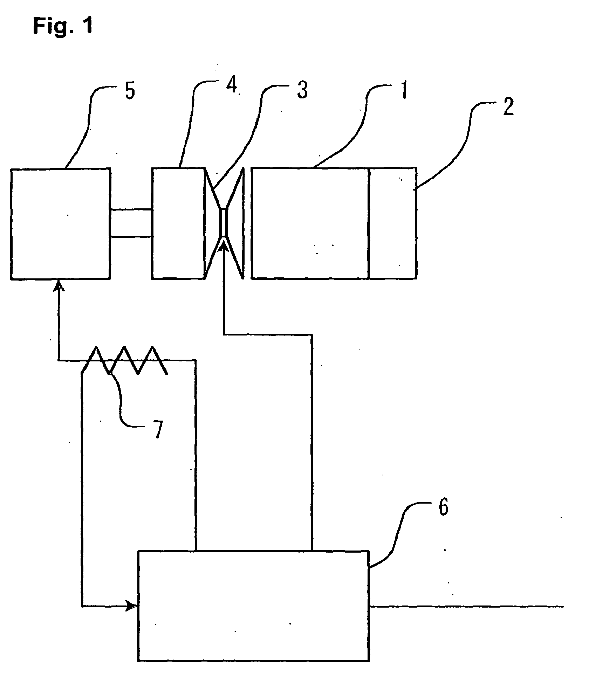

Referring now to the drawings, an example of an embodiment of the present invention will be described. Fig. 1 is a schematic diagram showing an example of the structure of a device which implements a method of controlling according to the embodiment of the present invention. In Fig. 1, reference numeral 1 designates a seatbelt retractor (a main body of a seatbelt retracting device), reference numeral 2 designates a spring mechanism, reference numeral 3 designates a clutch, reference numeral 4 designates a reduction gear, reference numeral 5 designates a motor, reference numeral 6 designates a motor control circuit, and reference numeral 7 designates a current detecting circuit.

The seatbelt retractor 1 is connected to the spring mechanism 2, and is connected to the reduction gear 4 via the clutch 3. The reduction gear 4 is directly connected to the motor 5. Power distribution to the motor 5 and ON-OFF of the clutch 3 are controlled by the motor control circuit 6.

When an instruction to drive the seatbelt retractor by the motor 5 is issued to the motor control circuit 6 via an external signal, not shown, the motor control circuit 6 starts power distribution to the motor 5, and turns the clutch 3 into the "ON" state, that is, brings the seatbelt retractor 1 and the reduction gear 4 into the coupled state.

The current distributed to the motor 5 is detected by the current detecting circuit 7 (current detecting means), and a feedback is given to the motor control circuit 6 (motor control means). The motor control circuit 6 reads the current value detected by the current detecting circuit 7 at predetermined time intervals, and calculates the difference value with respect to the previously read value. Then, the power distribution to the motor 5 is stopped according to a mode selected in advance out of three modes shown below.
(1) Mode 1
   Power distribution to the motor 5 is stopped when the difference value or the differential value of the current reaches or exceeds the predetermined threshold.
(2) Mode 2
   Power distribution to the motor 5 is stopped when the difference value or the differential value of the current reaches or exceeds the predetermined threshold, or when the current value reaches or exceeds a predetermined threshold (which is different from the threshold of the difference value or the differential value).
(3) Mode 3
   Control of Mode 1 or Mode 2 is executed, but the control is started after a predetermined period has elapsed after the power distribution to the motor 5 is started.

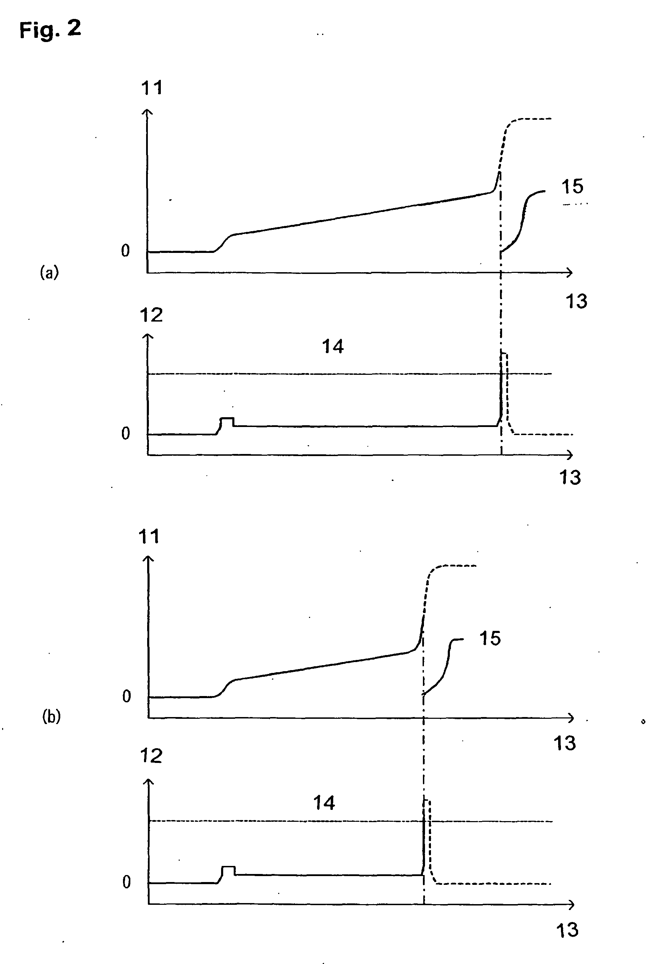

The operation in these control modes will be described in detail below. Fig. 2 is a drawing showing an example of the operation of the motor control circuit 6 in Mode 1. In Fig. 2, (a) shows the current value 11 and the rate 12 of increase in current with time 13 when retraction is being performed in a normal way, and (b) shows the current value and the rate of increase in current with time when a part of the body (arm, for example) of an occupant is caught in the seatbelt during retraction. Solid lines represent the actual current value and the rate of increase in current, and broken lines represent the current value and the rate of increase in current when the power distribution is not stopped.

When the power distribution to the motor 5 is started, the current value abruptly increases immediately, and subsequently, the seatbelt is retracted and then the current value increases gradually as the load increases. When the seatbelt is completely retracted, it cannot be retracted any longer, and hence the motor 5 stops and the current increases abruptly. The motor control circuit 6 obtains the rate of increase in current by differentiating the output of the current detecting circuit 7 or calculating the difference with respect to the previous measured value.

The motor control circuit 6 stops the power
distribution to the motor 5 when the obtained rate of increase in current exceeds the predetermined threshold 14, i.e. an instruction to stop power distribution is issued which is designated by reference numeral 15. In this manner, the power distribution to the motor 5 can be stopped when retraction of the seatbelt is completed.

In the case where a part of the body (arm, for example) of the occupant is caught in the seatbelt during retraction, as shown in (b), the load of the motor 5 increases at this moment. Therefore, the current value abruptly increases and the rate of increase in current exceeds the above-described threshold, and thus the motor control circuit 6 stops the power distribution to the motor 5 at this moment. Therefore, the power distribution is stopped at the moment when a retracting force generated by the motor 5 is still small, and hence a significant feeling of pressure is not applied to the body of the occupant.

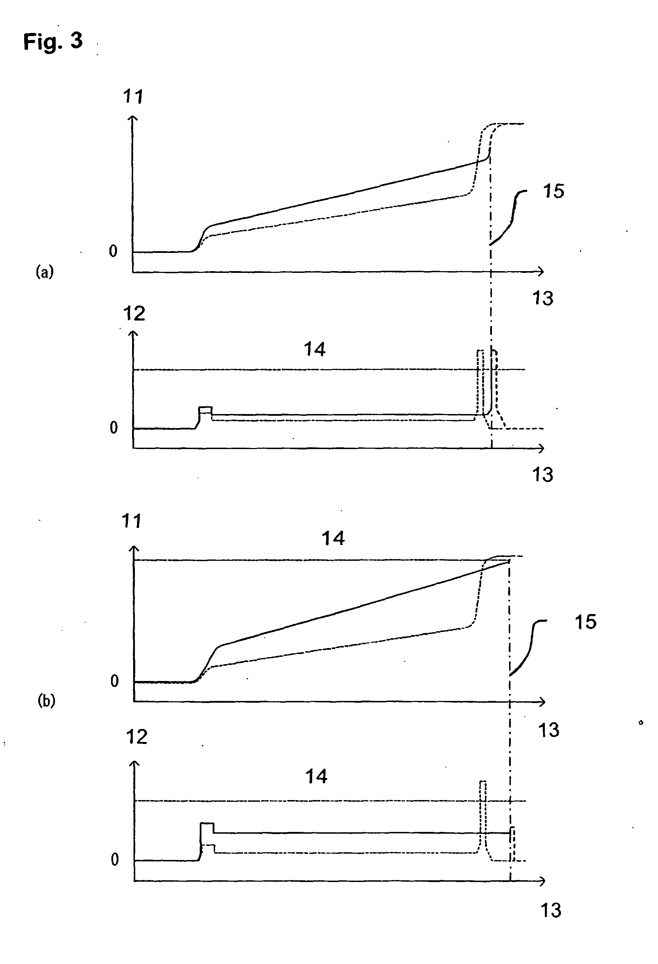

Fig. 3 is a drawing showing the operation of the motor control circuit 6 when the seatbelt retractor 1 is deteriorated and hence the torque required for retracting the seatbelt is increased, or when the motor 5 is deteriorated and hence the output torque is lowered.
(a) shows an example of the current value 11 and the rate 12 of increase in current when the torque required for retracting the seatbelt is increased, in which solid lines represent the case in which the torque required for retracting the seatbelt is increased, thin broken lines represent the case of the initial state as shown in Fig. 2. Thick broken lines represent the current value and the rate of increase in current when the power distribution is not stopped. In such a case, the current value required for retracting the seatbelt increases, and in addition, the rate of increase in current also increases. However, since the motor control circuit 6 detects the rate of increase in current and stops the power distribution to the motor when the detected value exceeds the threshold, the power distribution to the motor is stopped at the moment when retraction is completed as shown in the drawing.
   In contrast, when the device is adapted to stop the power distribution to the motor at the moment when the current value reaches the predetermined threshold as in the related art, as is clear from the drawing, the power distribution to the motor may stop before retraction is completed when the torque required for retracting the seatbelt increases depending on the value of the threshold.
(b) is a drawing showing an example in which the torque required for retracting the seatbelt is further increased. Solid lines represent the case in which the torque required for retracting the seatbelt is further increased, and thin broken line represents the initial state as sown in Fig. 2. Thick broken line represents the current value and the rate of increase in current when the power distribution is not stopped. In this case, when retraction of the seatbelt is completed, the current value almost reaches the saturation value, and hence the rate of increase in current has not room to increase even when retraction is completed.

Therefore, in the methods described in conjunction with Fig. 2 or Fig. 3(a), there is a case in which the power distribution cannot be stopped. Therefore, in such a case, the control method of Mode 2 is used, and the power distribution to the motor 5 is stopped also in the case where the current value 11 itself exceeds the predetermined threshold 14 in addition to the case where the rate of increase in current exceeds the predetermined threshold. The threshold of the current value is preferably slightly smaller than the saturation value of the current. In other words, secondary control such that the power distribution to the motor 5 is stopped in a state in which the change of the rate of increase in current cannot be increased because the current value is increased to the value near the saturation value is preferably employed.

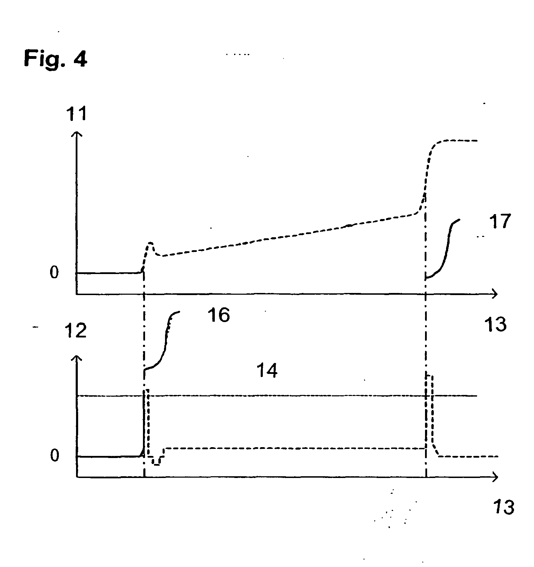

Fig. 4 is an explanatory drawing showing control of Mode 3. There may be the case in which the accelerated current 11 generated when the motor 5 is energized is significant depending on the specification of the motor 5, and hence the rate of increase in current 12 exceeds the predetermined threshold which is set in Mode 1 in the state of initial acceleration as shown in Fig. 4, i.e. an instruction to stop power distribution in Mode 1 is issued which is designated by reference numeral 15. In such a case, the power distribution to the motor 5 is stopped, and hence the actual retracting operation cannot be performed normally. Therefore, in Mode 3, control to stop the power distribution to the motor 5 is not executed in the initial driving stage of the motor 5, that is, for a predetermined period (preferably, the time period slightly longer than the period until the acceleration is completed) from the moment when the power distribution to the motor 5 is started.

That is, in Mode 1, the motor is driven only in the range indicated by the solid line shown in Fig. 4. However, by executing control in Mode 3, the power distribution to the motor 5 is stopped when retraction as shown by the broken line is proceeded and then retraction is completed as usual, or a part of the body (arm, for example) of the occupant is caught in the seatbelt, i.e. as designated by reference numeral 17 an instruction to stop power distribution in Mode 3 is issued.

## Claims

1. A method of controlling a seatbelt retracting device comprising a motor (5) and a mechanism (1) for retracting a seatbelt by the motor (5),
**characterized in that,**
the motor (5) is stopped when a rate (12) of increase in current flowing to the motor (5) reaches or exceeds a predetermined value (14).

2. A method of controlling a seatbelt retracting device according to Claim 1, **characterized in that** the motor (5) is stopped also when a current value (11) flowing to the motor (5) reaches or exceeds a predetermined value (14).

3. A method of controlling a seatbelt retracting device according to Claim 1 or Claim 2, **characterized in that** control to stop the motor (5) is not executed for a predetermined period from the moment when the motor (5) is activated.

4. A seatbelt retracting device, comprising
a motor (5), and
a mechanism (1) for retracting a seatbelt by the motor (5),
**characterized by**
current detecting means (7) for detecting a current flowing to the motor (5), and
motor control means (6) being adapted to stop the motor (5) when a rate (12) of increase of the current flowing to the motor (5) reaches or exceeds a predetermined value.

5. A seatbelt retractor device according to Claim 4, **characterized in that** the motor control means (6) are adapted to carry out the method according to any one of Claims 1-3.

## Patentansprüche

1. Verfahren zur Steuerung einer Sitzgurtaufrollvorrichtung, welche einen Motor (5) und einen Mechanismus (1), um einen Sitzgurt durch den Motor (5) zurückzuziehen, umfasst,
**dadurch gekennzeichnet,**
**dass** der Motor (5) gestoppt wird, wenn eine Anstiegsrate (12) bei einem Strom, welcher zu dem Motor (5) fließt, einen vorbestimmten Wert (14) erreicht oder übersteigt.

2. Verfahren zum Steuern einer Sitzgurtaufrollvorrichtung nach Anspruch 1, **dadurch gekennzeichnet, dass** der Motor (5) auch gestoppt wird, wenn ein Stromwert (11), welcher zu dem Motor (5) fließt, einen vorbestimmten Wert (14) erreicht oder übersteigt.

3. Verfahren zum Steuern einer Sitzgurtaufrollvorrichtung nach Anspruch 1 oder Anspruch 2, **dadurch gekennzeichnet, dass** eine Steuerung, um den Motor (5) zu stoppen, für eine vorbestimmte Periode von dem Moment an, wenn der Motor (5) aktiviert wird, nicht betrieben wird.

4. Sitzgurtaufrollvorrichtung umfassend
einen Motor (5), und
einen Mechanismus (1), um einen Sitzgurt durch den Motor (5) zurückzuziehen,
**gekennzeichnet durch**
Stromerfassungsmittel (7), um einen Strom, welcher zu dem Motor (5) fließt, zu erfassen, und
Motorsteuermittel (6), welche derart ausgestaltet sind, dass sie den Motor (5) stoppen, wenn eine Anstiegsrate (12) des Stroms, welcher zu dem Motor (5) fließt, einen vorbestimmten Wert erreicht oder übersteigt.

5. Sitzgurtaufrollvorrichtung nach Anspruch 4, **dadurch gekennzeichnet, dass** die Motorsteuermittel (6) derart ausgestaltet sind, dass sie das Verfahren nach einem der Ansprüche 1-3 ausführen.

## Revendications

1. Procédé destiné à commander un dispositif d'enroulement de ceinture de sécurité comprenant un moteur (5) et un mécanisme (1) destiné à enrouler une ceinture de sécurité au moyen du moteur (5), **caractérisé en ce que** le moteur (5) est arrêté lorsqu'un taux (12) d'augmentation du courant circulant dans le moteur (5) atteint ou dépasse une valeur prédéterminée (14).

2. Procédé destiné à commander un dispositif d'enroulement de ceinture de sécurité selon la revendication 1, **caractérisé en ce que** le moteur (5) est arrêté également lorsqu'une valeur (11) du courant qui circule dans le moteur (5) atteint ou dépasse une valeur prédéterminée (14).

3. Procédé destiné à commander un dispositif d'enroulement de ceinture de sécurité selon la revendication 1 ou 2, **caractérisé en ce qu'**une commande destinée à arrêter le moteur (5) n'est pas exécutée pendant une période prédéterminée à partir du moment où le moteur (5) est activé.

4. Dispositif d'enroulement de ceinture de sécurité, comprenant :
- un moteur (5), et
- un mécanisme (1) destiné à enrouler une ceinture de sécurité au moyen du moteur (5), **caractérisé en ce qu'**il comprend :
- des moyens de détection de courant (7) destinés à détecter un courant circulant dans le moteur (5), et
- des moyens de commande (6) de moteur adaptés pour arrêter le moteur (5) lorsqu'un taux (12) d'augmentation du courant circulant dans le moteur (5) atteint ou dépasse une valeur prédéterminée.

5. Dispositif d'enroulement de ceinture de sécurité selon r4, **caractérisé en ce que** les moyens de commande (6) de moteur sont adaptés pour exécuter le procédé selon l'une quelconque des revendications 1 à 3.
